# EUROPEAN PATENT SPECIFICATION

(11) **EP 0 564 636 B1**
(45) Date of publication and mention of the grant of the patent: **12.01.2000**
(21) Application number: 92923038.1
(22) Date of filing: 19.10.1992
(51) Int. Cl.: C08F 10/06

(54) **POLYPROPYLENE EXTRUSION COATING RESINS AND PROCESS FOR THE PRODUCTION THEREOF**
EXTRUSIONSBESCHICHTUNGSHARZE AUS POLYPROPYLEN UND VERFAHREN ZU IHRER HERSTELLUNG
COUCHAGE PAR EXTRUSION DE RESINES DE POLYPROPYLENE ET PROCEDE DE PRODUCTION

(30) Priority: 29.10.1991 US 784483
(43) Date of publication of application: 13.10.1993
(73) Proprietor: Huntsman Corporation, Salt Lake City, Utah 84108 (US)
(72) Inventor: VANDERBILT, Jeffrey, James, Longview, TX 75604 (US); GLOVER, James, Harrell, Longview, TX 75607 (US); SEEGER, Horst, Kurt, Longview, TX 75601 (US)
(74) Representative: Winkler, Andreas, Dr.
(86) International application number: US9209118
(87) International publication number: WO9309150

(56) References cited:
- EP-A- 0 012 605
- EP-A- 0 099 773
- EP-A- 0 251 100
- EP-A- 0 320 150
- EP-A- 0 412 534
- EP-A- 0 480 190
- GB-A- 1 150 801
- GB-A- 2 246 358

## Description

### Field of the Invention

The present invention relates to the process for the gas-phase production of polypropylene that is generally useful for extrusion coating and to the polypropylene produced thereby. The present invention also relates to blends of extrusion coatable polypropylene. The present invention further relates to extrusion coating processes using the extrusion coatable polypropylene and articles produced thereby.

### Background of the Invention

A wide variety of polypropylene, both crystalline and amorphous, and of high and low densities, are commercially available. Extrusion coating of thin films of polypropylene onto paper, paperboard, corregated board and aluminum substrates produces an extremely valuable article. The extrusion-coated article can be used in applications requiring oil resistance, water resistance and heat resistance. The polypropylene used for extrusion coating is generally produced by either the solution or slurry process. An example of the production of the extrusion coatable polypropylene is disclosed in U.S. Patent 3,418,396. The extrusion coatable composition is a blend of solution-produced polypropylene and low density polyethylene. An example of another extrusion coatable polypropylene is disclosed in U.S. 4,916,198 in which the polypropylene is high molecular weight, gel free with a branching index less than 1. This patent also discloses a process to prepare the polypropylene using electron beam treatment.

U.S. Patent 3,547,682 discloses composite compositions useful for extrusion coating containing difficult to extrude components, i.e., high density polyethylene (HDPE), polypropylene; and readily extrudable resins, i.e., low density polyethylene (LDPE), ethylene-vinyl acetate copolymer (EVA).

Japanese patents 59/075,934 and 59/049,921 disclose blends useful for extrusion coating containing 70-96 % isotactic polypropylene with a melt flow rate (MFR) of 15-50 g/10 min; 2-15 % low density polyethylene; and a blend of two amorphous ethylene-alpha-olefin copolymers.

Japanese Patent 57/057,740 discloses a blend that is useful for extrusion coating containing polypropylene with a MFR of 8-30 g/10 min; low density polyethylene with a melt index (MI) of 3-14 g/10 min; low density polyethylene with a MI greater than 20 grams/10 min; and amorphous ethylene-propylene copolymer with an ethylene content of 50-75 percent and a MFR of 2 g/10 min.

Japanese Patent 77/024,553 discloses a blend that is useful for extrusion coating containing 2-20 % low density polyethylene with a MI of 2-20 g/10 min; 2-20 percent low density polyethylene with a MI of 2 g/10 min, and a molecular weight distribution (MWd) of 8-20; 1-10 % amorphous ethylene-alpha-olefin copolymer; and the remainder of the composition being isotactic polypropylene.

Chemical Abstract 81,4515 discloses a blend useful for extrusion coating containing 75-95 % polypropylene, which has been pyrolyzed to a MFR of 10-150 g/10 min; and 5-25 % branched polyethylene with MI of 0.5-15 g/10 min.

EP-A-0 320 150 teaches a method to manufacture ultra high melt flow rate propylene polymer products for the production of non-woven fabrics by melt blown processes.

The state of the art economical processes for the production of polypropylene generally use gas-phase fluidized-bed technology. The process is run in the absence of solvent/diluent which eliminates the need for costly solvent removal facilities. Also the use of high-activity catalyst results in a polypropylene with low levels of catalyst residue which eliminates the need for costly catalyst removal. Unfortunately, polypropylene produced according to the gas-phase technology cannot be used in extrusion coating applications. Since extrusion coated polypropylene is an extremely valuable product and gas-phase technology is emerging as the method of choice for producing most polypropylene; it would be very desirable to be able to produce by gas-phase technology an extrusion coatable polypropylene. This is particularly true if the gas-phase produced polypropylene has properties comparable to extrusion coatable polypropylene produced by prior methods, but yet is more economical.

### Summary of the Invention

The composition of the present invention is a polypropylene composition that comprises 99.8 mol % up to 100 mol % propylene and 0 to 0.2 mol % of at least one other alpha-olefin wherein the polypropylene composition has a melt flow rate of 20 to 150 g/10 min at 230°C and a total xylene solubles content between 4 and 12 wt %. Alternatively, the polypropylene composition of the present invention comprises 92 mol % up to 99.8 mol % propylene and 0.2 to 8 mol % of at least one other alpha-olefin wherein the polypropylene has a melt flow rate of 20 to 150 g/10 min at 230°C and a total xylene solubles content between 4 and 35 wt %.

An additional aspect of the present invention is a process for the production of polypropylene in the gas phase which comprises reacting under gas-phase fluidized-bed reactor conditions at least 50 mol % propylene, one other alpha-olefin comonomer at a comonomer/propylene molar ratio of 0 to 0.33 and hydrogen at a hydrogen/propylene molar ratio of 0.043 to 0.2 in no more than 50 mol % inert gas carrier in the presence of a magnesium halide supported titanium halogen catalyst, an organoaluminum cocatalyst and an electron donor wherein the aluminun/titanium ratio is between 30 and 150 and the cocatalyst/electron donor molar ratio is between 3 and 6 and wherein said polypropylene composition suitable for extrusion coating has (a) a total xylene solubles content of betwenn 4 and 35 weight percent, and (b) a melt flow rate of between 20 and 150 g/10 min at 230°C.

A further aspect of the present invention is an extrusion coating process using the inventive polypropylene composition or a blend with low density polyethylene and the article of manufacture produced thereby.

### Detailed Description of the Invention

Applicants have unexpectedly discovered a polypropylene composition that can be extrusion coated neat or as blend such as with low density polyethylene, even though the polypropylene composition is prepared in a gas-phase fluidized-bed process. The polypropylene composition, particularly when blended with low density polyethylene, can be used in high speed extrusion coating of substrates, such as cellulosic sheets, and avoids many problems such as neck-in, weaving, streaking, surging and tearing of the extruded web.

The polypropylene composition unexpectedly has a melt flow rate between 20 and 150 g/10 min at 230°C and a total xylene solubles content between 4 and 35 wt % (homopolymer between 4 and 12 wt %) and can be used in extrusion coating. This unexpected combination of high melt flow rate and specific crystallinity levels (xylene solubles content) unexpectedly renders the inventive polypropylene composition extrusion coatable by commercial extrusion coating processes. The composition is generally prepared in a gas-phase fluidized-bed process with hydrogen in the presence of a titanium catalyst and an organoaluminum cocatalyst. The inventive polypropylene composition is generally unmodified and when taken directly from a gas-phase reactor has a melt flow rate at 230°C as determined by ASTM Method D 1238-85, of 20 to 150 grams/10 minutes and specific levels of semicrystalline and atactic polypropylene as measured by solubility in xylene at 25°C (xylene solubles content, Xs).

Another surprising advantage of the process of the present invention, particularly for commercial scale preparation, is that much less hydrogen is required to prepare the inventive material than would be required to prepare a material with high melt flow rate and high crystallinity (low xylene solubles content). In a practical sense, preparation of a high melt flow rate material is not feasible in the standard gas-phase process due to the excessive amounts of hydrogen required.

Polypropylene produced by gas-phase technology is known to those skilled in the art. Compositions of the invention can be prepared using a standard technology gas-phase reactor. Catalyst, cocatalyst, and electron donor are well known to those skilled in the art. Examples are disclosed in U.S. Patent 3,418,396, U.S. Patent 4,400,302, U.S. Patent 4,414,132, and U.S. Patent 4,329,253.

The preferred magnesium halide supported titanium halogen catalyst used in the gas-phase process of the present invention is titanium tetrachloride on magnesium chloride. The organoaluminum compound can be chosen from any of the known activators in catalyst systems comprising titanium halides. Thus aluminum trialkyl compounds, dialkyl aluminum halides and dialkyl aluminum alkoxides may be successfully used. Aluminum trialkyl compounds are preferred, particularly those wherein each of the alkyl groups has 2 to 6 carbon atoms, e.g., aluminum triethyl, aluminum tri-n-propyl, aluminum triisobutyl and aluminum tri-n-propyl, aluminum triisopropyl and aluminum dibutyl-n-amyl. The preferred organoaluminum cocatalyst is selected from trialkylaluminum compounds with triethylaluminum being most preferred.

Suitable electron donors are ethers, esters, ketones, phenols, amines, amides, imines, nitriles, phosphines, phosphites, stibines, arsines, phosphoramides and alcoholates. Examples of suitable electron donors are those referred to in U.S. Patent No. 4,136,243 and German Offenlegungesschrift No. 2,729,196. Preferred electron donors are esters and diamines, particularly esters of aromatic carboxylic acids, such as ethyl and methylbenzoate, para-methyoxyethyl benzoate, para-ethoxymethyl benzoate, para-ethyoxyethyl benzoate, ethyl acrylate, methyl methacrylate, ethyl acetate, dimethyl carbonate, dimethyl adipate, dihexyl fumerate, dibutyl maleate, ethyl isopropyl oxalate, ethyl para-chlorobenzoate, hexyl para-amino benzoate, isopropyl naphthanate, n-amyl toluate, ethyl cyclohexanoate, propyl pivalate, N,N,N',N'-tetramethyl ethylene diamine, 1,2,4-trimethyl piperazine, and 2,3,4,5-tetraethyl piperidine compounds, with para-ethoxyethyl benzoate being most preferred.

In the reaction process of the present invention the aluminum/titanium molar ratio is between 30 and 150, preferably between 35 and 70 with between 40 and 60 being most preferred. A molar ratio of aluminum/ titanium much above 150, is wasteful with respect to the organoaluminum component and high ratios result in excessively high levels of residual aluminum in the polymer. A molar ratio of aluminum/titanium below 30 results in a very sluggish reaction with low production rates, low titanium catalyst productivity, i.e., high levels of titanium catalyst residues.

In the reaction process of the present invention the cocatalyst/electron donor molar ratio is between 3 and 6, preferably between 3.2 and 5.0 with between 3.5 and 4.0 being most preferred. At a cocatalyst to electron donor molar ratio of much above 6, excessively high levels of xylene soluble content polymer may form. The high xylene solubles content polymer may be sticky and difficult to transfer out of the reactor. If xylene solubles content is sufficiently high, the transfer of the polymer from the reactor becomes practically impossible. In addition high xylene solubles content polymer may exhibit undesirable exudation when extruded as a thin film on various substrates. If cocatalyst to electron donor molar ratio is much below 3, a polymer is produced that is not extrusion coatable and is outside the scope of the present invention, i.e., xylene solubles content is too low.

In the reaction process of the present invention, the comonomer/propylene molar ratio and the hydrogen/propylene molar ratio during the reaction are preferably no greater than 0.055 and between 0.02 and 0.2 respectively, when the comonomer is ethylene; no greater than 0.27, and between 0.02 and 0.14 respectively, when the comonomer is 1-butene; and no greater than 0.33 and between 0.02 and 0.14 respectively, when the comonomer is 1-hexene, or 4-methyl-1-pentene.

Alternatively, when the process produces a homopolymer or near homopolymer, the hydrogen/propylene molar ratio during the reaction is between 0.02 and 0.16 when the comonomer is ethylene at an ethylene/propylene molar ratio of no greater than 0.001; or when the comonomer is 1-butene, 1-hexene or 4-methyl-1-pentene at a comonomer/propylene molar ratio of no greater than 0.005.

In an other alternative, the hydrogen/propylene molar ratio during the reaction is between 0.02 and 0.2 when the comonomer is ethylene at an ethylene/propylene molar ratio of no greater than 0.055; when the comonomer is 1-butene at a butene/propylene molar ratio of no greater than 0.27; or when the comonomer is 1-hexene or 4-methyl-1-pentene at a comonomer/propylene molar ratio of no greater than 0.33.

The process of the present invention is preferably carried out at a temperature between 50 and 90°C at a total pressure between 300 and 1000 psi (2068.5 and 6895 KPa), more preferably between 60 and 80°C at 400 to 600 psi (2758 and 4137 KPa).

The amount of propylene used in the gas-phase process of the present invention is at least 50 mol % in the presence of no more than 50 mol % of an inert carrier gas such as nitrogen. The amount of propylene monomer in the reactor or total monomers if a comonomer is used, is preferably between 60 and 100 mol % with inert carrier gas between 0 and 40 mol %. At a concentration above 50 mol % inert carrier gas the reaction rate drops off without achieving much benefit from the added fluidization caused by this much inert carrier gas. The inert carrier gas is not a requirement since the monomers can provide fluidization to the catalyst bed.

The inventive polypropylene produced according to the inventive process is crystalline in nature but yet has the defined amounts of xylene solubles and the defined melt flow rate. As discussed above, the xylene solubles content of the polypropylene varies with the cocatalyst/electron donor molar ratio. The xylene solubles content of the polypropylene homopolymer is between 4 and 12 wt %, preferably between 5 and 12 wt % with between 6 and 12 being more preferred. The xylene solubles of the polypropylene copolymer is between 4 and 35 wt %, preferably between 6 and 15 wt % with between 8 and 12 being more preferred. For the purposes of comparison, typical gas-phase produced polypropylene has a xylene solubles content of 3%. We have discovered that when the xylene solubles content of the polypropylene is below 4 inferior extrusion coating properties are observed. A higher xylene solubles content is preferred, however, if the xylene solubles content is much above 12 for the homopolymer or much above 35 for the copolymer, the polypropylene becomes sticky and transfer from the reactor becomes impractical if not impossible.

The melt flow rate of the inventive polypropylene is between 20 and 150 g/10 min at 230°C (as determined in the characterization section to follow), preferably between 40 and 80 g/10 min, more preferably between 50 and 70 g/10 min. While a melt flow rate below 20 g/10 min gives a polymer with inferior extrusion coating properties. While a melt flow rate above 150 g/10 min gives a polymer with low melt strength and low melt viscosity, i.e., it becomes runny.

The polypropylene produced by the inventive gas-phase process, while having the different properties mentioned above (melt flow rate and xylene solubles) retains many of the characteristics of polypropylene produced by standard gas-phase processes. The polypropylene of the present invention as with other gas-phase produced polypropylene, has a significantly higher stereoregularity than polypropylene produced by the solution process. An example of the solution process is disclosed in U.S. Patent No. 3,272,788.

The polypropylene produced by gas-phase has other characteristics that are different from polypropylene produced by a solution process. They include: higher melting point (2°C higher, e.g., the melting point for homopolymer is generally greater than 159°C) as determined by differential scanning calorimetry (DSC); higher crystallinity as determined by X-ray diffraction; lower heptane solubles content (at least 10 percent lower); higher tensile strength as determined by A.S.T.M. Method D-633.

For the random copolymer of propylene with another alpha-olefin, the alpha-olefin is chosen from a group of hydrocarbons of C-2 to C-10. The level of alpha-olefin in the copolymer is in the range of 0.1 to 8 percent. The preferred range is 0.2 to 6 percent. The most preferred range is 0.5 to 4 percent. Due to economic and processing considerations, the preferred alphaolefins are ethylene, 1-butene, 4-methyl-1-pentene, and 1-hexene, with the most preferred alpha-olefin being ethylene.

Although the polypropylene composition can be used in many applications, a blend with low density polyethylene (LDPE) is preferred. Blends of polypropylene with LDPE can be prepared in the range of 50 to 99 percent polypropylene and 1 to 50 percent LDPE. The preferred range is 95 to 70 polypropylene and 5 to 30 LDPE. The most preferred range is 85 to 75 polypropylene and 15 to 25 LDPE.

LDPE should have a density of 0.910 to 0.926 grams/cubic centimeters. The melt index (MI) of the LDPE @ 180°C as measured by ASTM Method D 1238-85 should be in the range of 1 to 30 grams/10 minutes. The preferred range is 2 to 10 grams/10 minutes. The most preferred range is 3 to 5 grams/10 minutes. The MFR of the resulting blend should be in the range of 20 to 150. The preferred range should be 35 to 100 grams/10 minutes. The most preferred range should be 50 to 70 grams/10 minutes.

The polymers of the invention can be compounded with additives such as antioxidants, stabilizers for inhibiting degradation by heat, ultraviolet light and weathering, opaqueing pigments such as titanium dioxide and carbon black, plasticizers, tackifying resins and small amounts (less than 20 percent) or other compatible polymers.

The blend compositions can be prepared in various ways, such as dry blending, dry blending and then passing through a compounding extruder, compounding on a milling roll, or in a Banbury mixer, by fusion, or by solution blending. Any method whereby the components can be blended together will produce the desired blend. For example, fine pellets of each polymer, having an average size of 1/16 inch with up to 20 percent of the pellets being 1/8 inch in diameter with some pellets being smaller than 1/16 inch, are blended mechanically, and the blend is fed to an extruder wherein it is fused and extruded.

The melt can be extruded or fabricated at melt temperatures of up to 620°F although melt temperatures in the range of 550°F to 600°F are preferred and have been found to give excellent results with maximum useable extruding or coating speeds with a minimum of defects such as pinholes.

Thus, another aspect of the present invention entails an extrusion coating process that comprises extruding at elevated temperatures onto a substrate a composition selected from:
(I) a polypropylene composition comprising 99.8 to 100 mol % propylene and 0 to 0.2 mol % of at least one other alpha-olefin wherein the polypropylene has a melt flow rate of 20 to 150 g/10 min at 230°C and a total xylene solubles content between 4 and 12 wt %;
(II) a polypropylene composition comprising 92 to 99.8 mol % propylene and 0.2 to 8 mol % of at least one other alpha-olefin wherein the polypropylene has a melt flow rate of 20 to 150 g/10 min at 230°C and a total xylene solubles content between 4 and 35 wt %;
(III) A blend of (a) 99 to 50 wt % of a polypropylene composition comprising 99.8 to 100 mol % propylene and 0 to 0.2 mol % of at least one other alpha-olefin wherein the polypropylene has a melt flow rate of 20 to 150 g/10 min at 230°C and a total xylene solubles content between 4 and 12 wt %. and (b) 1 to 50 wt % low density polyethylene; and
(IV) A blend of (a) 99 to 50 wt % of a polypropylene composition comprising 92 to 99.8 mol % propylene and 0.2 to 8 mol % of at least one other alpha-olefin wherein the polypropylene has a melt flow rate of 20 to 150 g/10 min at 230°C and a total xylene solubles content between 4 and 35 wt %. and (b) 1 to 50 wt % low density polyethylene.

Yet another aspect of the present invention entails the extrusion coated articles produced above comprising a layer of the above defined composition on a substrate.

While mention has been made of the formation of thin films and extrusion coatings of the polymers useful in this invention, the blends are useful anywhere that polypropylene can be used. Examples are in the fabrication or manufacture of injection molded articles, extruded pipe, blow molded articles, very thin coatings for meat wrapping paper, coatings on the inner wall of moisture resistant multiwall paper bags, and high gloss coatings on paper.

The above composition of matter can be extrusion coated onto a variety of substrates in monolayer or multilayer construction including co-extrusion. The extrusion coated articles can be used for: heat-resistant coatings; release sheets, e.g., vinyl tile; corrugated board, e.g., can spacers.

Where the polypropylene product is used for extrusion coating of a substrate such as paper, the paper may, for example, have a basis weight of from 5 pounds (22.7 kg)/ream to 200 pounds (90.7 kg)/ream, which corresponds to paper as thin as tissue, and being up to the thickness of paperboard. Bleached or unbleached kraft paper or thin board are preferred although sheets from bleached or unbleached sulfite, groundwood, or soda pulps are useful. Similarly, other fibrous or nonfibrous substrates may be coated.

The following examples are intended to illustrate the invention but are not intended to be a limitation there on.

### EXAMPLES

### General

### Gas-Phase Reactor

A continuous reactor was used for the production of polypropylene (PP) powder. All gas components were purified to remove known catalyst poisons. A gas composition of propylene at 70 mole percent was maintained. In the preparation of propylene-alphaolefin random copolymers, the appropriate alpha-olefin was added at the desired concentration. Hydrogen concentration was varied to produce the desired melt flow rate (MFR) PP. The remainder of the gas composition was made up of nitrogen and minor amounts of inert impurities. The reactor bed temperature was maintained at 67°C. The total pressure was 535 psi (3689 KPa). The bed was fluidized by maintaining a cycle gas flow of 19,000 cubic feet/hour (53.802 cubic meter/hour). Catalyst was fed continuously to the reactor. Triethylaluminum (TEAL) was continuously fed as a dilute solution in isopentane. The molar ratio of aluminum/titanium (Al/Ti) was between 50-60. The electron donor, para-ethoxyethyl benzoate (PEEB), was continuously fed as a dilute solution in isopentane. The molar ratio of TEAL/PEEB was varied to prepare the desired product. Polypropylene powder was discharged from the reactor at periodic intervals in order to give a constant bed weight. The powder was deactivated by treatment with steam.

### Compounding

The powder was compounded with the additive system of choice using either a 3.5-inch (8.89 cm) Modern Plastics Machinery single-screw extruder or a 40-millimeter Berstorff twin-screw extruder. The additive system of choice can be chosen based on technology well known to those skilled in the art. Examples of additive systems found to be effective are blends comprised of (amounts are based on the weight of the entire extrusion coating system): 0-2,000 parts per million primary antioxidant, e.g., hindered phenol; 0-2,000 parts per million secondary antioxidant, e.g., phosphite ester; 0-3,000 parts per million synergistic antioxidant, e.g., thioester; 0-2,000 parts per million acid scavenger. A specific example of a hindered phenol is tetrakis[methylene 3-(3',5'-di-**tert**-butyl-4'-hydroxyphenyl)propionate]methane (Irganox 1010 available from Ciba Geigy). A specific example of a phosphite ester is tri (mono and dinonylphenyl) phosphite (Naugard PHR available from Uniroyal Chemical Company). A specific example of a thioester is distearyl thiodipropionate (DSTDP). A specific example of an acid scavenger is calcium stearate.

### Blends with Low Density Polyethylene

Pellets, Tenite 1550P low density polyethylene (LDPE), available from Eastman Chemical Company were mixed with the stabilized pellets of PP. The pellets were blended by drum rotation.

### Extrusion Coating Evaluation

The materials were evaluated as follows: each material was fed to a 3 1/2-inch (8.89 cm) Egan extruder having a barrel length to diameter ratio of 24:1. The four zones of the extruder were maintained, from back to front, at 450°F, 540°F, 580°F, and 630°F. A metering type screw having 6 compression flights, and 12 metering flights was used. Prior to entering the die the melt passed through two screens, one 24 x 24 mesh (707 µm) and one 14 x 88 mesh (1.19 mm). The die was an Egan 33-inch (83.82 cm) Extrusion Dies Incorporation flex-lip coat hanger type extrusion die deckled to 16 inches (40.64 cm). The temperature of the die was held at 580°F. The extrusion rate was held constant at 160 pounds per hour. The resulting film extrudate was passed through a 4 1/2-inch (11.43 cm) air gap into the nip formed by a rubber-covered pressure roll and a chill roll. At the same time, 40 pound (181.44 kg) bases weight kraft paper was fed into the nip with the pressure roll in contact with the kraft paper. The nip pressure applied was 100 pounds (453.59 kg) per linear inch. The chill roll was a 24-inch (60.96 cm) diameter matte finish or gloss finish chrome-plated steel roll, water cooled to maintain a temperature of 60°F on the roll. The coated paper was taken off the chill roll at a point 180° from the nip formed by the pressure roll and chill roll. The chill roll was operated at linear speeds of from 200 feet per minutes (1.017 m/sec) to 1,200 feet per minute (6.096 m/sec).

### Characterization

The resins were characterized using standard analytical testing methodology. MFR and MI were determined using ASTM Method D 1238-85. Xs was determined by dissolution of the polymer in refluxing xylene. The solution was allowed to cool to 25°C to effect crystallization. Xs was determined by measuring the concentration of polymer that remained in xylene at 25°C. Melting point was determined by differential scanning calorimetry (DSC) using ASTM Method D-3418. Melting point (Tm), heat of fusion (Delta Hf), crystallization temperature (Tc), and heat of crystallization (Delta Hc) were obtained on a second heating cycle. The molecular weight distributions were determined on a Waters 150C GPC that was retrofitted with a Viscotek 150R in-line differential viscometer. The unit was calibrated using a broad PP standard with an Mw = 267000, and Mn = 43000. Thus, the values were relative, and should not be quantitatively compared to other MW determinations. Ethylene content of ethylene-propylene random copolymers was measured using infrared spectroscopy (IR).

### Extrusion Coating Evaluation

### EXAMPLE 1

A resin was prepared at a hydrogen/propylene molar ratio of 0.059 and a TEAL/PEEB molar ratio of 3.3. The resulting polymer was analyzed and had the following characteristics: MFR of 70.6 grams/10 minutes, Xs of 9.2 percent, Tm of 160.2°C, Delta Hf of 86.2 Joules/gram, Tc of 120.3°C, Delta Hc of 90.3 Joules/gram, and MWd of 13. The pelletized/stabilized resin coated to a line speed as fast as 650 feet/minute (3.302 m/sec) Neck-in @ 300 feet/minute (1524 m/sec) = 2.91 inches (7.39 cm). Neck-in @ 500 feet/minute (2540 m/sec) = 3.10 inches (7.87 cm).

### EXAMPLE 2

A blend containing 80 weight percent of the stabilized resin described in Example 1 and 20 weight percent LDPE was prepared. The blend coated to maximum line speed, > 1,200 feet/minute (6096 m/sec). Neck-in @ 500 feet/minute (2540 m/sec) = 1.6 inches (4.06 cm) , neck-in @ 1,000 feet/minute (5080 m/sec) = 1.40 inches (3.56 cm).

### EXAMPLE 3

The resin was prepared at a hydrogen/propylene molar ratio of 0.070 and a TEAL/PEEB molar ratio of 3.1. The resulting polymer was analyzed and had the following characteristics: MFR of 56.1 grams/10 minutes, Xs of 7.6 percent, Tm =160.1°C, Delta Hf of 91.1 Joules/gram, Tc of 121.5°C, Delta Hc of 92.2 Joules/gram, and MWd of 11. The pelletized/stabilized resin coated to a line speed as fast as 525 feet/minute (2667 m/sec). Neck-in @ 300 feet/minute (1524 m/sec) = 2.70 inches (6.86 cm).

### EXAMPLE 4

A blend containing of 80 weight percent of the stabilized resin described in Example 3 and 20 weight percent LDPE, was prepared. The blend coated to maximum line speed, > 1,200 feet/minute (6096 m/sec). Neck-in @ 500 feet/minute (1524 m/sec) = 1.40 inches (3.56 cm), neck-in @ 1,000 feet/minute = 1.40 inches (3.56 cm).

### EXAMPLE 5

A resin was prepared at a hydrogen/propylene molar ratio of 0.068, ethylene/propylene molar ratio of 0.001, and TEAL/PEEB molar ratio of 3.6. The resulting polymers was analyzed and had the following characteristics: ethylene content of 0.5 percent, MFR of 66.4 grams/10 minutes, Xs of 9.8 percent, Tm of 159.9°C, Delta Hf of 74.0 Joules/gram, Tc of 108.9°C, and Delta Hc of 86.7 Joules/gram. The pelletized/stabilized resin coated to a line speed as fast as 600 feet/minute (3048·m/sec). Neck-in @ 300 feet/minute (1524 m/sec) = 2.50 inches (6.35 cm).

### EXAMPLE 6

A blend containing 80 weight percent of the stabilized resin described in Example 5 and 20 weight percent LDPE, was prepared. The blend coated to maximum line speed, > 1,200 feet/minute (6096 m/sec). Neck-in @ 500 feet/minute (2540 m/sec) = 1.35 inches (3.43 cm), neck-in @ 1,000 feet/minute (5080 m/sec) = 1.2 inches (3.05 cm).

### EXAMPLE 7

A resin was prepared at hydrogen/propylene molar ratio of 0.20, ethylene/propylene molar ratio of 0.019, and TEAL/PEEB molar ratio of 3.0, the propylene partial pressure was 57 mole percent, and the temperature was 57°C. The resulting polymer was analyzed and had the following characteristics: ethylene content of 3.9 percent, MFR of 61.2 grams/10 minutes, Xs of 11.4 percent, Tm of 147.1°C, Delta Hf of 65.4 Joules/gram, Tc of 101.9°C, and Delta Hc of 73.5 Joules/gram. The pelletized/stabilized resin coated to a line speed as fast as 550 feet/minute (2794 m/sec). Neck-in @ 300 feet/minute (1524 m/sec) = 2.45 inches (6.22 cm).

### EXAMPLE 8

A blend containing 80 weight percent of the stabilized resin described in Example 7 and 20 weight percent LDPE, was prepared. The blend coated to maximum line speed, > 1,200 feet/minute (6096 m/sec). Neck-in @ 500 feet/minute (2540 m/sec) = 1.20 inches (3.05 cm), neck-in @ 1,000 feet/minute (5080 m/sec) = 1.15 inches (2.92 cm).

### EXAMPLE 9 - Less Preferred

A resin was prepared at hydrogen/propylene molar ratio of 0.043 and a TEAL/PEEB molar ratio of 4.1. The resulting polymer was analyzed and had the following characteristics: MFR of 25.2 grams/10 minutes, Xs of 7.1 percent, Tm of 160.6°C, Delta Hf of 85.5 Joules/gram, Tc of 120.4°C, Delta Hc of 85.4 Joules/gram, and MWd of 8.6. The pelletized/stabilized resin coated to a line speed as fast as 300 feet/minute (1524 m/sec). Neck-in @ 300 feet/minute (1524 m/sec) = 2.56 inches (6.5 cm).

### EXAMPLE 10 - Less Preferred

A blend containing 80 weight percent of the stabilized resin described in Example 9 and 20 weight percent LDPE, was prepared. The blend coated to a line speed as fast as 700 feet/minute (3556 m/sec). Neck-in @ 500 feet/minute (2540 m/sec) = 1.5 inches (3.81 cm).

### EXAMPLE 11 - Less Preferred

A resin was prepared at a hydrogen/propylene molar ratio of 0.078, ethylene/propylene molar ratio of 0.001, and TEAL/PEEB molar ratio of 3.0, the propylene partial pressure was 55 mole percent, and the temperature was 57°C. The resulting polymer was analyzed and had the following characteristics; ethylene content of 0.5 percent, MFR of 60.6 grams/10 minutes, Xs of 6.9 percent, Tm of 161.3°C. Delta Hf of 81.3 Joules/gram, Tc of 109.5°C, Delta Hc 94.0 Joules/gram. The pelletized/stabilized resin coated to a line speed as fast as 475 feet/minute (2413 m/sec). Neck-in @ 300 feet/minute (1524 m/sec) = 2.40 inches. (6.10 cm)

### EXAMPLE 12 - Comparative

A resin was prepared at a hydrogen/propylene molar ratio of 0.082 and TEAL/PEEB molar ratio of 2.2. The resulting polymer was analyzed and had the following characteristics: MFR of 23.2 grams/10 minutes, Xs of 3.2 percent, Tm of 162.7°C, Delta Hf of 101.9 Joules/gram, Tc of 118.6°C, Delta Hc of 104.6 Joules/gram, and MWd of 6.1. The pelletized/stabilized resin coated to a line speed as fast as 300 feet/minute (1524 m/sec). Neck-in @ 300 feet/minute (1524 m/sec) = 2.3 inches (5.84 cm).

### EXAMPLE 13 - Comparative

A blend containing 80 weight percent of the stabilized resin described in Example 12 and 20 weight percent LDPE, was prepared. The blend coated to a line speed as fast as 550 feet/minute (2794 m/sec). Neck-in @ 500 feet/minute (2540 m/sec) = 1.50 inches (3.81 cm).

### EXAMPLE 14 - Comparative

A resin was prepared at a hydrogen/propylene molar ratio of 0.125 and TEAL/PEEB molar ratio of 2.2. The resulting polymer was analyzed and had the following characteristics: MFR of 55.6 grams/10 minutes, Xs of 3.0 percent, Tm of 161.2°C, Delta Hf of 107.2 Joules/gram, Tc of 116.4°C, Delta Hc of 106.3 Joules/gram, and MWd of 11. The pelletized/stabilized resin coated to a line speed as fast as 300 feet/minute (1524 m/sec). Neck-in @ 300 feet/minute (1524 m/sec) = 2.45 inches (6.22 cm).

### EXAMPLE 15 - Comparative

A resin was prepared at a hydrogen/propylene molar ratio of 0.130 and TEAL/PEEB molar ratio of 1.7. The resulting polymer was analyzed and had the following characteristics: MFR of 47.9 grams/10 minutes, Xs of 1.3 percent, and MWd of 11. A blend comprised of 80 weight percent of the stabilized resin and 20 weight percent LDPE, was prepared. The blend coated to a line speed as fast as 1,100 feet/minute (5588 m/sec). Neck-in @ 500 feet/minute (2540 m/sec) = 1.50 inches (3.81 cm). Neck-in @ 1,000 feet/minute (5080 m/sec) = 1.5 inches (3.81·cm).

### EXAMPLE 16 - Comparative

Tenite P4-049, MFR = 1.5 grams/10 minutes, obtained from Eastman Chemical Company, was subjected to peroxide treatment to give a resin with MFR = 65 grams/10 minutes. A blend containing 90 weight percent of the stabilized resin and 10 weight percent LDPE, was prepared. The blend coated to a line speed as fast as > 1,200 feet/minute (6096 m/sec). Neck-in @ 500 feet/minute (2540 m/sec) = 3.05 inches (7.75 cm). Neck-in @ 1,000 feet/minute (5080 m/sec) = 4.40 inches (11.18 cm).

### Discussion of Examples 1-16 and Tables I and II:

Blends of the invention, Examples 2 and 4, gave excellent results when evaluated in extrusion coating applications. The blend described in Example 2 coated to maximum measurable coating speeds (>1,200 feet/minute) (6096 m/sec). Neck-in at 500 feet/minute (2540 m/sec) was 1.60 inches (4.06 cm) and at 1,000 feet/minute (5080 m/sec) was 1.40 inches (3.56 cm). The blend described in Example 4 coated to maximum measurable coating speeds (>1,200 feet/minute (6096 m/sec)). Neck-in at 500 feet/minute (2540 m/sec) was 1.40 inches (3.56 cm), and at 1,000 feet/minute (5080 m/sec) was 1.40 inches (3.56 cm).

In comparison, blends described in Comparative Examples 13 and 15 gave inferior results when evaluated in extrusion coating applications. The blend described in Comparative Example 13 coated to a coating speed of 550 feet/minute. At this point edge weave and surging were observed. The blend described in Comparative Example 15 coated to a coating speed of 1,100 feet/minute (5080 m/sec). At this point edge weave and surging were observed. The blend described in less preferred Example 10 (Xs within scope of the invention but less preferred) coated to a coating speed of 700 feet/minute (3556 m/sec) which is significantly higher than comparative Example 13. At this point edge weave and surging were observed.

Gas-phase produced neat PP of specified MFR and Xs were evaluated. Resins described in Examples 1 and 3 gave superior results when evaluated in extrusion coating applications. The resin described in Example 1 coated to 650 feet/minute (3302 n/s). The resin described in Example 3 coated to 525 feet/minute (2667 m/sec).

In comparison, resins described in Comparative Example 12 and 14 gave inferior results when evaluated in extrusion coating applications. The resin described in Comparative Example 12 coated to a coating speed of 300 feet/minute (1524 m/sec). At this point edge weave and surging were observed. The resin described in Comparative Example 14 coated to a coating speed of 300 feet/minute (1524 m/sec). At this point edge weave and surging were observed. The resin described in less preferred Example 9 coated to a coating speed of 300 feet/minute (1524 m/sec), although the Xs and MFR are within the broad scope of the invention. At this point edge weave and surging were observed.

Gas-phase produced neat ethylene-propylene random copolymers were evaluated. Resins described in Examples 5 and 7, gave superior results when evaluated in extrusion coating applications. The resin described in Example 5 coated to 600 feet/minute (3048 m/sec). The resin described in Example 7 coated to 550 feet/minute (2794 m/sec). In comparison, the resin described in less preferred Example 11 coated to a coating speed of 475 feet/minute (2.413 m/sec). At this point edge weaving and surging were observed. Note: no non-inventive comparative copolymer was prepared.

Blends of the invention, Examples 6 and 8, gave excellent results when evaluated in extrusion coating applications. The blend described in Example 6 coated to maximum measurable coating speeds (> 1,200 feet/minute (6096 m/sec)). Neck-in at 500 feet/minute (2540 m/sec) was 1.35 inches (3.43 cm), and at 1,000 feet/minute (5080 m/sec) was 1.20 inches (3.05 cm). The blend described in Example 8 coated to maximum measurable coating speeds (> 1,200 feet/minute (6096 m/sec)). Neck-in at 500 feet/minute (2540 m/sec) was 1.20 inches (3.05 cm), and at 1,000 feet/minute (5080 m/sec) was 1.15 inches (2.92 cm). Surprisingly these neck-in values observed at high line speeds were significantly lower than conventional extrusion coating formulations which give neck-in values at 1,000 feet/minute (5080 m/sec) of > 1.3 inches (3.30 cm). The lower neck-in results in less edge bead and therefore a more economical process.

For a resin to extrusion coat in commercial applications, adequate melt strength is essential to maintain the integrity of molten polymer web. PP with MFR in the range of 20 to 150 grams/10 minutes can be readily manufactured from PP of lower MFR by a process known to those skilled in the art as controlled rheology (CR). Unfortunately, PP produced by CR does not extrusion coat under commercially feasible conditions. This can be seen by looking at Comparative Example 16 where PP with MFR = 1.5 grams/10 minutes was subjected to CR conditions to give a resin with MFR = 60 grams/10 minutes. The CR resin was blended with 10 percent (weight) LDPE. Evaluation of the CR resin/LDPE blend showed excessive neck-in (neck-in = 3.05 inches (7.75 cm) @ 500 feet/minute (2540 m/sec)). In addition, as line speed increased neck-in increased (neck-in = 4.40 inches (11.18 cm) @ 1,000 feet/minute (5080 m/sec)). This is undesirable because in a commercial application, high line speeds are advantageous for obvious economic reasons. Neck-in is important to the extrusion coater for one major reason. This reason is that as neck-in increases the thickness of the edge bead also increases. This edge bead must be trimmed off and discarded making it desirable to have as thin an edge bead as possible.

It is believed that excessively high levels of neck-in are due to inadequate melt strength. It is believed that the CR process selectively cleaves the highest molecular weight (longest chains). The longest chain PP are believed to contribute to melt strength due to chain entanglement.

The invention has been described in detail with particular reference to preferred embodiments thereof, but it will be understood that variations and modifications can be effected within the spirit and scope of the invention.

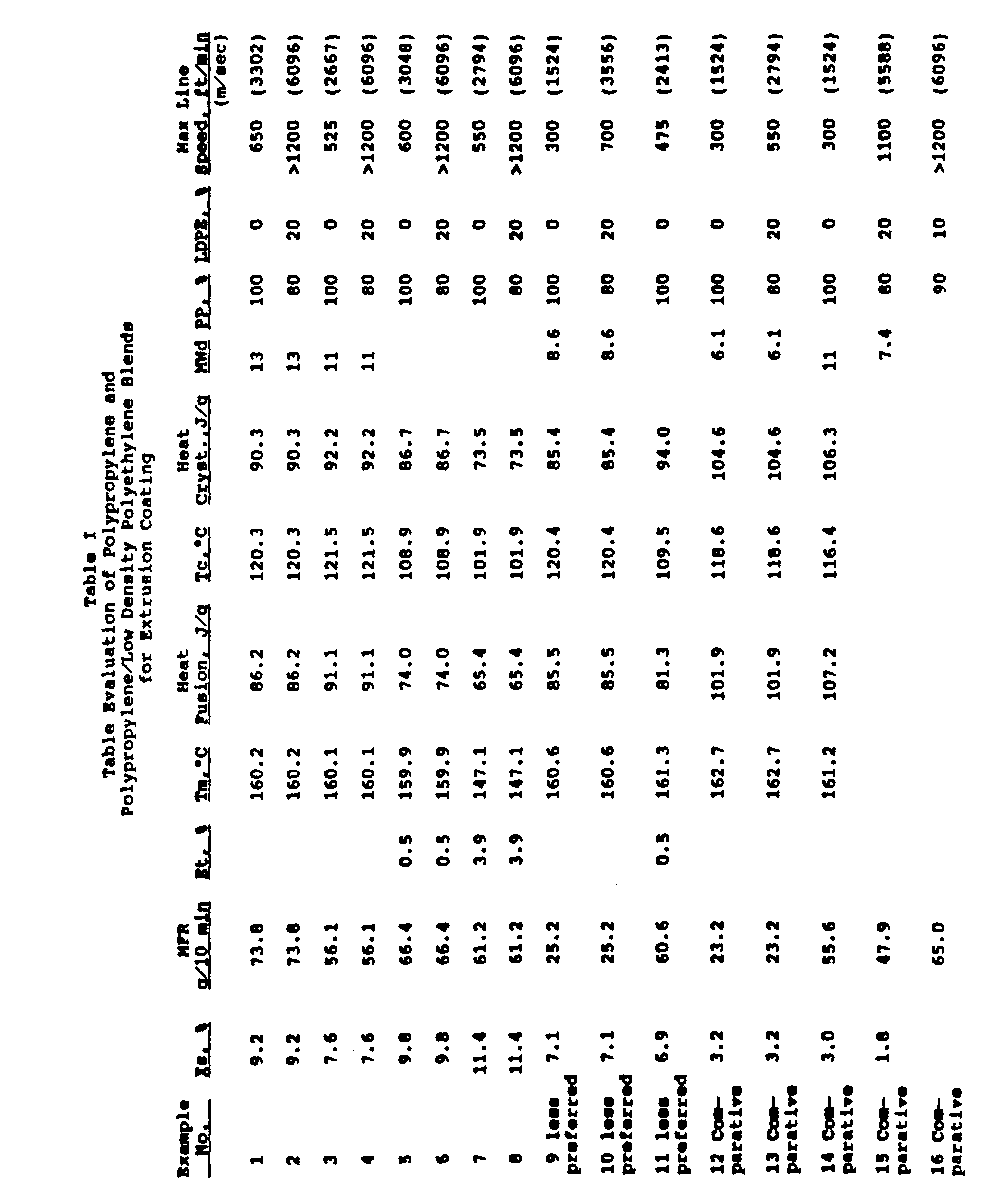

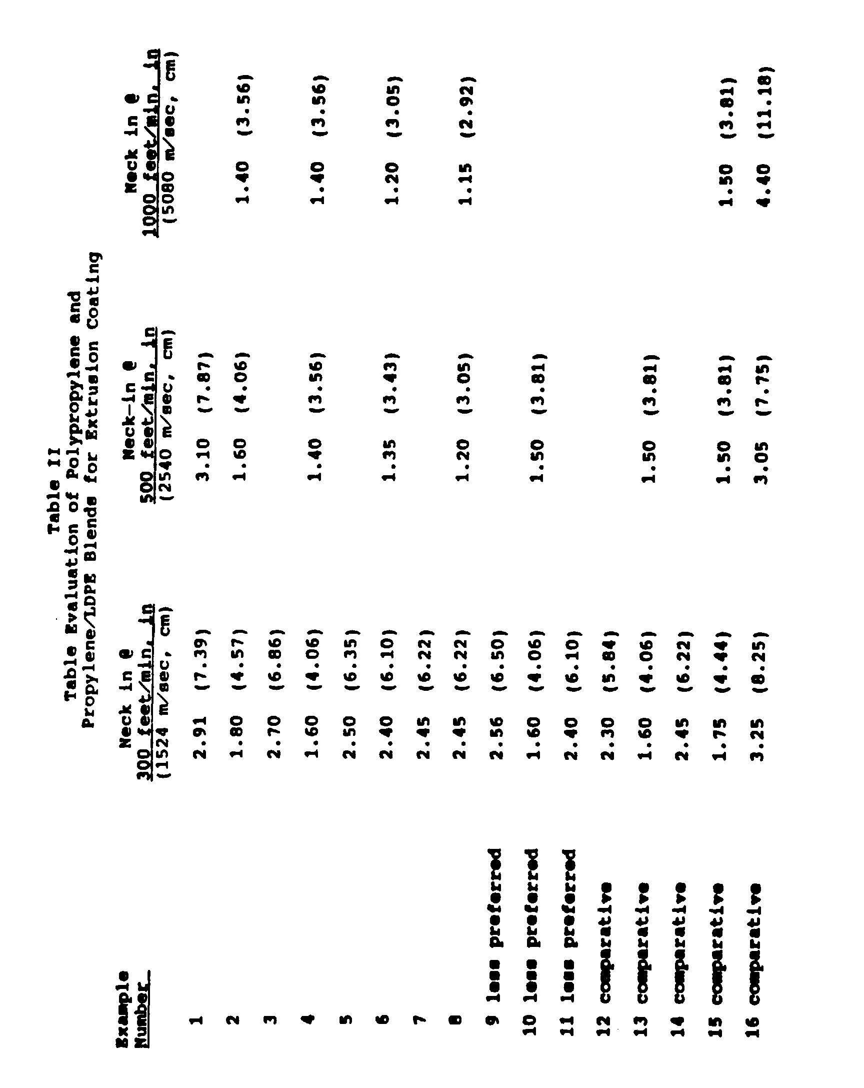

## Claims

1. A process for producing a polypropylene composition suitable for extrusion coating, said process comprising reacting, under gas-phase fluidized-bed reactor conditions, at least 50 mol % propylene, another alpha-olefin at an alpha-olefin/propylene molar ratio ranging from 0 to 0.33, and hydrogen at a hydrogen/propylene molar ratio of 0.043 to 0.2 in no more than 50 mol % inert gas carrier in the presence of a magnesium halide supported titanium halogen catalyst, an organoaluminum cocatalyst, and an electron donor, wherein the aluminum/titanium molar ratio is between 30 and 150 and the cocatalyst/ electron donor molar ratio is between 3 and 6, and wherein said polypropylene composition suitable for extrusion coating has (a) a total xylene solubles content of between 4 and 35 weight percent, and (b) a melt flow rate of between 20 and 150 g/10 min at 230°C.

2. The process according to Claim 1 wherein the another alpha-olefin is a comonomer and a comonomer/propylene molar ratio and the hydrogen/propylene molar ratio during the reaction are no greater than 0.055 and between 0.02 and 0.2, respectively, when the comonomer is ethylene; no greater than 0.27, and between 0.02 and 0.14, respectively, when the comonomer is 1-butene; and no greater than 0.33 and between 0.02 and 0.14, respectively, when the comonomer is 1-hexene, or 4-methyl-1-pentene.

3. The process according to Claim 2 wherein the hydrogen/propy-lene molar ratio is between 0.02 and 0.16 when the comonomer is ethylene at an ethylene/propylene molar ratio of no greater than 0.001; or when the comonomer is 1-butene, 1-hexene or 4-methyl-1-pentene at a comonomer/propylene molar ratio of no greater than 0.005.

4. The process according to Claim 1 wherein the other alpha-olefin is a comonomer and the hydrogen/propylene molar ratio during the reaction is between 0.02 and 0.2 when the comonomer is ethylene at an ethylene/propylene molar ratio of no greater than 0.055; when the comonomer is 1-butene at a butene/propylene molar ratio of no greater than 0.27; or when the comonomer is 1-hexene or 4-methyl-1-pentene at a comonomer/propylene molar ratio of no greater than 0.33.

5. The process according to Claim 1 wherein the titanium halogen catalyst is titanium tetrachloride, the organoaluminum cocatalyst is triethylaluminum, and the electron donor is paraethoxyethyl benzoate.

6. The process according to Claim 5 wherein the triethylaluminum/para-ethoxyethyl benzoate molar ratio is between 3.2 and 5.

7. The process according to Claim 1 wherein the temperature is between 60 and 80°C and the total pressure is between 300 and 1000 psi (2068.5 and 6895 Kpa).

8. The process according to Claim 1 wherein propylene is present during the reaction at a concentration between 60 and 100 mol %.

9. A polypropylene composition of propylene and another alpha-olefin monomer, suitable for extrusion coating, said composition comprising 99.8 to 100 mol % propylene and 0 to 0.2 mol % of the alpha-olefin wherein the polypropylene has a melt flow rate of 20 to 150 g/10 min at 230°C and a total xylene solubles content between 4 and 12 wt %.

10. The composition according to claim 9 wherein the melt flow rate is 40 to 80 g/10 min at 230°C.

11. A polypropylene composition of propylene and another alpha-olefin monomer, suitable for extrusion coating, said com-position comprising 92 to 99.8 mol % of the propylene and 0.2 to 8 mol % of the another alpha-olefin wherein the polypropylene has a melt flow rate of 20 to 150 g/10 min at 230°C and a total xylene solubles content between 4 and 35 wt %.

12. The composition according to Claim 11 wherein the other alpha-olefin is ethylene.

13. The composition according to Claim 11 wherein the melt flow rate is 40 to 80 g/10 min at 230°C.

14. A polymerized composition suitable for extrusion coating, said composition comprising a blend of
(a) 99 to 50 wt % of the polypropylene composition of claim 9, and
(b) 1 to 50 wt % low density polyethylene.

15. A polymerized resin composition suitable for extrusion coating, said composition comprising a blend of
(a) 99 to 50 wt % of the polypropylene of claim 11, and
(b) 1 to 50 wt % low density polyethylene.

16. An extrusion coating process comprising extruding at elevated temperatures onto a substrate a composition selected from:
(I) a polypropylene composition comprising 99.8 to 100 mol % propylene and 0 to 0.2 mol % of at least one other alpha-olefin wherein the polypropylene has a melt flow rate of 20 to 150 g/10 min at 230 C and a total xylene solubles between 4 and 12 wt.%;
(II) a polypropylene composition comprising 92 to 99.8 mol % propylene and 0.2 to 8 mol % of at least one other alpha-olefin wherein the polypropylene has a melt flow rate of 20 to 150 g/10 min at 230°C and a total xylene solubles content between 4 and 35 wt %;
(III) a blend of (a) 99 to 50 wt % of a polypropylene composition comprising 99.8 to 100 mol % propylene and 0 to 0.2 mol % at least one other alpha-olefin wherein the polypropylene has a melt flow rate of 20 to 150 g/10 min at 230°C and a total xylene solubles content between 4 and 12 wt % and (b) 1 to 50 wt % low density polyethylene; and
(IV) a blend of (a) 99 to 50 wt % of a polypropylene com-position comprising 92 to 99.8 mol % propylene and 0.2 to 8 mol % of at least one other alpha-olefin wherein the polypropylene has a melt flow rate of 20 to 150 g/10 min at 230°C and a total xylene solubles content between 4 and 35 wt % and (b) 1 to 50 wt % low density polyethylene.

17. The extrusion coating process according to claim 16 wherein the polypropylene composition has a melt flow rate of 40 to 80 g/10 minutes at 230°C.

18. An extrusion coated article of manufacture comprising a substrate and a layer coated thereon that is composed cf a composition selected from:
(I) a polypropylene composition comprising 99.8 to 100 mol % propylene and 0 to 0.2 mol % of at least one other alpha-olefin wherein the polypropylene has a melt flow rate of 20 to 150 g/10 min at 230°C and a total xylene solubles content between 4 and 12 wt %;
(II) a polypropylene composition comprising 92 to 99.8 mol % propylene and 0.2 to 8 mol % of at least one other alpha-olefin wherein the polypropylene has a melt flow rate of 20 to 150 g/10 min at 230°C and a total xylene solubles content between 4 and 35 wt %;
(III) a blend of (a) 99 to 50 wt % of a polypropylene composition comprising 99.8 to 100 mol % propylene and 0 to 0.2 mol % of at least one other alpha-olefin wherein the polypropylene has a melt flow rate of 20 to 150 g/10 min at 230°C and a total xylene solubles content between 4 and 12 wt % and (b) 1 to 50 wt % low density polyethylene; and
(IV) a blend of (a) 99 to 50 wt % of a polypropylene com-position comprising 92 to 99.8 mol % propylene and 0.2 to 8 mol % of at least one other alpha-olefin wherein the polypropylene has a melt flow rate of 20 to 150 g/10 min at 230°C and a total xylene solubles content between 4 and 35 wt % and (b) 1 to 50 wt % low density polyethylene.

19. The process according to claim 1, wherein said total xylene solubles content is between 6 and 15 weight percent.

20. The process according to claim 1, wherein said total xylene solubles content is between 6 and 12 weight percent.

21. The process according to claim 1, wherein said melt flow rate is between 40 and 80 g/10 min at 230°C.

22. The process for producing an extrusion coating resin com-position comprising the step of blending the polypropylene composition of claim 1 with a low density polyethylene in a range of from 1 to 50 weight percent.

23. The process according to claim 22, wherein said low density polyethylene is in a range of from 5 to 30 weight percent.

24. The process according to claim 23, wherein said low density polyethylene is in a range of from 15 to 25 weight percent.

25. The process according to claim 24, wherein said low density polyethylene has a density of from 0.910 to 0.926 grams/cubic centimeters.

## Patentansprüche

1. Ein Verfahren zur Herstellung einer für Extrusionsbeschichtung geeigneten Polypropylenzusammensetzung, wobei besagtes Verfahren unter Bedingungen eines Gasphasenfließbettreaktors das Reagieren von wenigstens 50 Mol-% Propylen, eines anderen alpha-Olefins bei einem alpha-Olefin/Propylen-Molverhältnis, das von 0 bis 0,33 reicht, und Wasserstoff bei einem Wasserstoff/Propylen-Molverhältnis von 0,043 bis 0,2 in nicht mehr als 50 Mol-% Inertgasträger in der Gegenwart eines Magnesiumhalogenidgeträgerten Titanhalogen-Katalysators, eines Organoaluminium-Cokatalysators und eines Elektronendonors umfaßt, wobei das Aluminium/Titan-Molverhältnis zwischen 30 und 150 liegt und das Cokatalysator/Elektronendonor-Molverhältnis zwischen 3 und 6 liegt, und wobei besagte für Extrusionsbeschichtung geeignete PolypropylenZusammensetzung (a) einen Gesamtgehalt von in Xylol löslichen Stoffen von zwischen 4 und 35 Gew.-%, und (b) eine Schmelzflußgeschwindigkeit von zwischen 20 und 150 g/10 min bei 230°C aufweist.

2. Das Verfahren nach Anspruch 1, wobei das andere alpha-Olefin ein Comonomer ist und ein Comonomer/Propylen-Molverhältnis und das Wasserstoff/Propylen-Molverhältnis während der Reaktion nicht größer als 0,055 bzw. zwischen 0,02 und 0,2 ist, wenn das Comonomer Ethylen ist; nicht größer als 0,27, bzw. zwischen 0,02 und 0,14 ist, wenn das Comonomer 1-Buten ist; und nicht größer als 0,33 bzw. zwischen 0,02 und 0,14 ist, wenn das Comonomer 1-Hexen, oder 4-Metyhl-1-penten ist.

3. Das Verfahren nach Anspruch 2, wobei das Wasserstoff/Propylen-Molverhältnis zwischen 0,02 und 0,16 ist, wenn das Comonomer Ethylen bei einem Ethylen/Propylen-Molverhältnis von nicht größer als 0,001 ist; oder wenn das Comonomer 1-Buten, 1-Hexen oder 4-Methyl-1-penten bei einem Comonomer/Propylen-Molverhältnis von nicht größer als 0,005 ist.

4. Das Verfahren nach Anspruch 1, wobei das andere alpha-Olefin ein Comonomer ist und das Wasserstoff/Propylen-Molverhältnis während der Reaktion zwischen 0,02 und 0,2 liegt, wenn das Comonomer Ethylen bei einem Ethylen/Propylen-Molverhältnis von nicht größer als 0,055 ist; wenn das Comonomer 1-Buten bei einem Buten/Propylen-Molverhältnis von nicht größer als 0,27 ist; oder wenn das Comonomer 1-Hexen oder 4-Methyl-1-penten bei einem Comonomer/Propylen-Molverhältnis von nicht größer als 0,33 ist.

5. Das Verfahren nach Anspruch 1, wobei der Titanhalogen-Katalysator Titantetrachlorid, der Organoaluminium-Cokatalysator Triethylaluminium und der Elektronendonor para-Ethoxyethylbenzoat ist.

6. Das Verfahren nach Anspruch 5, wobei das Triethylaluminium/para-Ethoxyethylbenzoat-Molverhältnis zwischen 3,2 und 5 liegt.

7. Das Verfahren nach Anspruch 1, wobei die Temperatur zwischen 60 und 80°C und der Gesamtdruck zwischen 2068,5 und 6895 Kpa (300 und 1000 psi) liegt.

8. Das Verfahren nach Anspruch 1, wobei Propylen während der Reaktion mit einer Konzentration zwischen 60 und 100 Mol-% vorhanden ist.

9. Eine Polypropylenzusammensetzung aus Propylen und einem anderen alpha-Olefinmonomer, geeignet für Extrusionsbeschichtung, wobei besagte Zusammensetzung 99,8 bis 100 Mol-% Propylen und 0 bis 0,2 Mol-% des alpha-Olefins umfaßt, wobei das Polypropylen eine Schmelzflußgeschwindigkeit von 20 bis 150 g/10 min bei 230°C und einen Gesamtgehalt von in Xylol löslichen Stoffen zwischen 4 und 12 Gew.-% aufweist.

10. Die Zusammensetzung nach Anspruch 9, wobei die Schmelzflußgeschwindigkeit 40 bis 80 g/10 min bei 230°C ist.

11. Eine Polypropylenzusammensetzung aus Propylen und einem anderen alpha-Olefinmonomer, geeignet für Extrusionsbeschichtung, wobei besagte Zusammensetzung 92 bis 99,8 Mol-% Propylen und 0,2 bis 8 Mol-% des anderen alpha-Olefin umfaßt, wobei das Polypropylen eine Schmelzflußgeschwindigkeit von 20 bis 150 g/10 min bei 230°C und einen Gesamtgehalt von in Xylol löslichen Stoffen zwischen 4 und 35 Gew.-% aufweist.

12. Die Zusammensetzung nach Anspruch 11, wobei das andere alpha-Olefin Ethylen ist.

13. Die Zusammensetzung nach Anspruch 11, wobei die Schmelzflußgeschwindigkeit 40 bis 80 g/10 min bei 230°C ist.

14. Eine für Extrusionsbeschichtung geeignete polymerisierte Zusammensetzung, wobei besagte Zusammensetzung eine Mischung aus
(a) 99 bis 50 Gew.-% der Polypropylenzusammensetzung aus Anspruch 9, und
(b) 1 bis 50 Gew.-% Polyethylen niedriger Dichte
umfaßt.

15. Eine für Extrusionsbeschichtung geeignete polymerisierte Harzzusammensetzung, wobei besagte Zusammensetzung eine Mischung aus
(a) 99 bis 50 Gew.-% des Polypropylens aus Anspruch 11, und
(b) 1 bis 50 Gew.-% Polyethylen niedriger Dichte
umfaßt.

16. Ein Verfahren zur Extrusionsbeschichtung, welches bei erhöhten Temperaturen das Extrudieren einer Zusammensetzung auf ein Substrat umfaßt, welche ausgewählt ist aus:
(I) einer Polypropylenzusammensetzung, welche 99,8 bis 100 Mol-% Propylen und 0 bis 0,2 Mol-% wenigstens eines anderen alpha-Olefins umfaßt, wobei das Polypropylen eine Schmelzflußgeschwindigkeit von 20 bis 150 g/10 min bei 230°C und einen Gesamtgehalt von in Xylol löslichen Stoffen zwischen 4 und 12 Gew.-% aufweist;
(II) einer Polypropylenzusammensetzung, welche 92 bis 99,8 Mol-% Propylen und 0,2 bis 8 Mol-% wenigstens eines anderen alpha-Olefins umfaßt, wobei das Polypropylen eine Schmelzflußgeschwindigkeit von 20 bis 150 g/10 min bei 230°C und einen Gesamtgehalt von in Xylol löslichen Stoffen zwischen 4 und 35 Gew.-% aufweist;
(III) einer Mischung aus (a) 99 bis 50 Gew.-% einer Polypropylenzusammensetzung, welche 99,8 bis 100 Mol-% Propylen und 0 bis 0,2 Mol-% wenigstens eines anderen alpha-Olefins umfaßt, wobei das Polypropylen eine Schmelzflußgeschwindigkeit von 20 bis 150 g/10 min bei 230°C und einen Gesamtgehali von in Xylol löslichen Stoffen zwischen 4 und 12 Gew.-% aufweist, und (b) 1 bis 50 Gew.-% Polyethylen niedriger Dichte und
(IV) einer Mischung aus (a) 99 bis 50 Gew.-% einer Polypropylenzusammensetzung, welche 92 bis 99,8 Mol-% Propylen und 0,2 bis 8 Mol-% wenigstens eines anderen alpha-Olefins umfaßt, wobei das Polypropylen eine Schmelzflußgeschwindigkeit von 20 bis 150 g/10 min bei 230°C und einen Gesamtgehalt von in Xylol löslichen Stoffen zwischen 4 und 35 Gew.-% aufweist, und (b) 1 bis 50 Gew.-% Polyethylen niedriger Dichte.

17. Das Verfahren zur Extrusionsbeschichtung nach Anspruch 16, wobei die Polypropylenzusammensetzung eine Schmelzflußgeschwindigkeit von 40 bis 80 g/10 min bei 230°C aufweist.

18. Ein extrusionsbeschichteter Herstellungsartikel, welcher ein Substrat und eine darauf beschichtete Schicht umfaßt, welche aus einer Zusammensetzung gebildet wird, die ausgewählt ist aus:
(I) einer Polypropylenzusammensetzung, welche 99,8 bis 100 Mol-% Propylen und 0 bis 0,2 Mol-% wenigstens eines anderen alpha-Olefins umfaßt, wobei das Polypropylen eine Schmelzflußgeschwindigkeit von 20 bis 150 g/10 min bei 230°C und einen Gesamtgehalt von in Xylol löslichen Stoffen zwischen 4 und 12 Gew.-% aufweist;
(II) einer Polypropylenzusammensetzung, welche 92 bis 99,8 Mol-% Propylen und 0,2 bis 8 Mol-% wenigstens eines anderen alpha-Olefins umfaßt, wobei das Polypropylen eine Schmelzflußgeschwindigkeit von 20 bis 150 g/10 min bei 230°C und einen Gesamtgehalt von in Xylol löslichen Stoffen zwischen 4 und 35 Gew.-% aufweist;
(III) einer Mischung aus (a) 99 bis 50 Gew.-% einer Polypropylenzusammensetzung, welche 99,8 bis 100 Mol-% Propylen und 0 bis 0,2 Mol-% wenigstens eines anderen alpha-Olefins umfaßt, wobei das Polypropylen eine Schmelzflußgeschwindigkeit von 20 bis 150 g/10 min bei 230°C und einen Gesamtgehalt von in Xylol löslichen Stoffen zwischen 4 und 12 Gew.-% aufweist, und (b) 1 bis 50 Gew.-% Polyethylen niedriger Dichte und
(IV) einer Mischung aus (a) 99 bis 50 Gew.-% einer Polypropylenzusammensetzung, welche 92 bis 99,8 Mol-% Propylen und 0,2 bis 8 Mol-% wenigstens eines anderen alpha-Olefins umfaßt, wobei das Polypropylen eine Schmelzflußgeschwindigkeit von 20 bis 150 g/10 min bei 230°C und einen Gesamtgehalt von in Xylol löslichen Stoffen zwischen 4 und 35 Gew.-% aufweist, und (b) 1 bis 50 Gew.-% Polyethylen niedriger Dichte

19. Das Verfahren nach Anspruch 1, wobei besagter Gesamtgehalt von in Xylol löslichen Stoffen zwischen 6 und 15 Gew.-% liegt.

20. Das Verfahren nach Anspruch 1, wobei besagter Gesamtgehalt von in Xylol löslichen Stoffen zwischen 6 und 12 Gew.-% liegt.

21. Das Verfahren nach Anspruch 1, wobei besagte Schmelzflußgeschwindigkeit zwischen 40 und 80 g/10 min bei 230°C liegt.

22. Das Verfahren zur Herstellung einer Extrusionsbeschichtungsharzzusammensetzung, welches den Schritt des Mischens der Polypropylenzusammensetzung aus Anspruch 1 mit einem Polyethylen niedriger Dichte in einem Bereich von 1 bis 50 Gew.-% umfaßt.

23. Das Verfahren nach Anspruch 22, wobei besagtes Polyethylen niedriger Dichte in einem Bereich von 5 bis 30 Gew.-% liegt.

24. Das Verfahren nach Anspruch 23, wobei besagtes Polyethylen niedriger Dichte in einem Bereich von 15 bis 25 Gew.-% liegt.

25. Das Verfahren nach Anspruch 24, wobei besagtes Polyethylen niedriger Dichte eine Dichte von 0,910 bis 0,926 g/cm³ aufweist.

## Revendications

1. Procédé de production d'une composition de polypropylène adaptée au couchage par extrusion, ledit procédé consistant à faire réagir, dans des conditions de réacteur à lit fluidisé en phase gazeuse, au moins 50 % molaire de propylène, une autre alpha oléfine en un rapport molaire alpha-oléfine/propylène compris entre 0 et 0,33, et de l'hydrogène en un rapport molaire hydrogène/propylène compris entre 0,043 et 0,2 dans pas plus de 50 % molaire de gaz vecteur inerte en présence d'un catalyseur halogène au titane supporté par un halogénure de magnésium, d'un cocatalyseur d'organoaluminium, et d'un donneur d'électrons, dans lequel le rapport molaire aluminium/titane est compris entre 30 et 150 et le rapport molaire cocatalyseur/donneur d'électrons est compris entre 3 et 6, et dans lequel ladite composition de polypropylène adaptée au couchage par extrusion a (a) une teneur totale en matières solubles dans le xylène comprise entre 4 et 35 % en poids, et (b) un débit à l'état fondu compris entre 20 et 150 g/10 min. à 230°C.

2. Procédé selon la revendication 1, dans lequel l'autre alpha oléfine est un comonomère et le rapport molaire comonomère/propylène et le rapport molaire hydrogène/propylène durant la réaction ne sont respectivement pas supérieur à 0,055 et compris entre 0,02 et 0,2, lorsque le comonomère est l'éthylène; respectivement pas supérieur à 0,27, et compris entre 0,02 et 0,14, lorsque le comonomère est le 1-butène; et respectivement pas supérieur à 0,33 et compris entre 0,02 et 0,14, lorsque le comonomère est le 1-hexène, ou le 4-méthyl-1-pentène.

3. Procédé selon la revendication 2, dans lequel le rapport molaire hydrogène/propylène est compris entre 0,02 et 0,16 lorsque le comonomère est l'éthylène en un rapport molaire éthylène/propylène non supérieur à 0,001; ou lorsque le comonomère est le 1-butène, le 1-hexène ou le 4-méthyl-1-pentène en un rapport molaire comonomère/propylène non supérieur à 0,005.

4. Procédé selon la revendication 1, dans lequel l'autre alpha oléfine est un comonomère et le rapport molaire hydrogène/propylène durant la réaction est compris entre 0,02 et 0,2 lorsque le comonomère est l'éthylène en un rapport molaire éthylène/propylène non supérieur à 0,055; lorsque le comonomère est le 1-butène en un rapport molaire butène/propylène non supérieur à 0,27; ou lorsque le comonomère est le 1-hexène ou le 4-méthyl-1-pentène en un rapport molaire comonomère/propylène non supérieur à 0,33.

5. Procédé selon la revendication 1, dans lequel le catalyseur halogène au titane est le tétrachlorure de titane, le cocatalyseur d'organoaluminium est le triéthylaluminium, et le donneur d'électrons est le paraéthoxybenzoate d'éthyle.

6. Procédé selon la revendication 5, dans lequel le rapport molaire triéthylaluminium/paraéthoxybenzoate d'éthyle est compris entre 3,2 et 5.

7. Procédé selon la revendication 1, dans lequel la température est comprise entre 60 et 80°C et la pression totale est comprise entre 300 et 1000 psi (2068,5 et 6895 KPa).

8. Procédé selon la revendication 1, dans lequel le propylène est présent durant la réaction en une concentration comprise entre 60 et 100 % molaire.

9. Composition de polypropylène de propylène et d'un autre monomère alpha oléfine, adaptée au couchage par extrusion, ladite composition comprenant entre 99,8 % et 100 % molaire de propylène et entre 0 et 0,2 % molaire de l'alpha oléfine dans laquelle le polypropylène a un débit à l'état fondu compris entre 20 et 150 g/10 min. à 230°C et une teneur totale en matières solubles dans le xylène comprise entre 4 et 12 % en poids.

10. Composition selon la revendication 9, dans laquelle le débit à l'état fondu est de 40 à 80 g/10 min. à 230°C.

11. Composition de polypropylène de propylène et d'un autre monomère alpha oléfine, adaptée au couchage par extrusion, ladite composition comprenant entre 92 % et 99,8 % molaire de propylène et entre 0,2 et 8 % molaire de l'autre alpha oléfine dans laquelle le polypropylène a un débit à l'état fondu compris entre 20 et 150 g/10 min. à 230°C et une teneur totale en matières solubles dans le xylène comprise entre 4 et 35 % en poids.

12. Composition selon la revendication 11, dans laquelle l'autre alpha oléfine est l'éthylène.

13. Composition selon la revendication 11, dans laquelle le débit à l'état fondu est de 40 à 80 g/10 min. à 230°C.

14. Composition polymérisée adaptée au couchage par extrusion, ladite composition comprenant un mélange de :
(a) 99 à 50 % en poids de la composition de polypropylène selon la revendication 9, et
(b) 1 à 50 % en poids de polyéthylène à basse densité.

15. Composition de résine polymérisée adaptée au couchage par extrusion, ladite composition comprenant un mélange de :
(a) 99 à 50 % en poids du polypropylène selon la revendication 11, et
(b) 1 à 50 % en poids de polyéthylène à basse densité.

16. Procédé de couchage par extrusion consistant à extruder à des températures élevées sur un support une composition choisie parmi :
(I) une composition de polypropylène comprenant 99,8 à 100 % molaire de propylène et 0 à 0,2 % molaire d'au moins une autre alpha oléfine dans laquelle le polypropylène a un débit à l'état fondu de 20 à 150 g/10 min. à 230°C et une teneur totale en matières solubles dans le xylène entre 4 et 12 % en poids;
(II) une composition de polypropylène comprenant 92 à 99,8 % molaire de propylène et 0,2 à 8 % molaire d'au moins une autre alpha oléfine dans laquelle le polypropylène a un débit à l'état fondu de 20 à 150 g/10 min. à 230°C et une teneur totale en matières solubles dans le xylène entre 4 et 35 % en poids;
(III) un mélange de (a) 99 à 50 % en poids d'une composition de polypropylène comprenant 99,8 à 100 % molaire de propylène et 0 à 0,2 % molaire d'au moins une autre alpha oléfine dans laquelle le polypropylène a un débit à l'état fondu de 20 à 150 g/10 min. à 230°C et une teneur totale en matières solubles dans le xylène entre 4 et 12 % en poids et (b) 1 à 50 % en poids de polyéthylène à basse densité; et
(IV) un mélange de (a) 99 à 50 % en poids d'une composition de polypropylène comprenant 92 à 99,8 % molaire de propylène et 0,2 à 8 % molaire d'au moins une autre alpha oléfine dans laquelle le polypropylène a un débit à l'état fondu de 20 à 150 g/10 min. à 230°C et une teneur totale en matières solubles dans le xylène entre 4 et 35 % en poids et (b) 1 à 50 % en poids de polyéthylène à basse densité.

17. Procédé de couchage par extrusion selon la revendication 16 dans lequel la composition de polypropylène a un débit à l'état fondu de 40 à 80 g/10 minutes à 230°C.

18. Article de fabrication couché par extrusion comprenant un support et une couche couchée dessus qui est constituée d'une composition choisie parmi :
(I) une composition de polypropylène comprenant 99,8 à 100 % molaire de propylène et 0 à 0,2 % molaire d'au moins une autre alpha oléfine dans laquelle le polypropylène a un débit à l'état fondu de 20 à 150 g/10 min. à 230°C et une teneur totale en matières solubles dans le xylène entre 4 et 12 % en poids;
(II) une composition de polypropylène comprenant 92 à 99,8 % molaire de propylène et 0,2 à 8 % molaire d'au moins une autre alpha oléfine dans laquelle le polypropylène a un débit à l'état fondu de 20 à 150 g/10 min. à 230°C et une teneur totale en matières solubles dans le xylène entre 4 et 35 % en poids;
(III) un mélange de (a) 99 à 50 % en poids d'une composition de polypropylène comprenant 99,8 à 100 % molaire de propylène et 0 à 0,2 % molaire d'au moins une autre alpha oléfine dans laquelle le polypropylène a un débit à l'état fondu de 20 à 150 g/10 min. à 230°C et une teneur totale en matières solubles dans le xylène entre 4 et 12 % en poids et (b) 1 à 50 % en poids de polyéthylène à basse densité; et
(IV) un mélange de (a) 99 à 50 % en poids d'une composition de polypropylène comprenant 92 à 99,8 % % molaire de propylène et 0,2 à 8 % molaire d'au moins une autre alpha oléfine dans laquelle le polypropylène a un débit à l'état fondu de 20 à 150 g/10 min. à 230°C et une teneur totale en matières solubles dans le xylène entre 4 et 35 % en poids et (b) 1 à 50 % en poids de polyéthylène à basse densité.

19. Procédé selon la revendication 1, dans lequel ladite teneur totale en matières solubles dans le xylène est comprise entre 6 et 15 % en poids.

20. Procédé selon la revendication 1, dans lequel ladite teneur totale en matières solubles dans le xylène est comprise entre 6 et 12 % en poids.

21. Procédé selon la revendication 1, dans lequel ledit débit à l'état fondu est compris entre 40 et 80 g/10 min. à 230°C.

22. Procédé de production d'une composition de résine pour couchage par extrusion comprenant l'étape de mélange de la composition de polypropylène selon la revendication 1 avec un polyéthylène à basse densité dans un intervalle entre 1 et 50 % en poids.

23. Procédé selon la revendication 22, dans lequel ledit polyéthylène à basse densité est compris entre 5 et 30 % en poids.

24. Procédé selon la revendication 23, dans lequel ledit polyéthylène à basse densité est compris entre 15 et 25 % en poids.

25. Procédé selon la revendication 24, dans lequel ledit polyéthylène à basse densité a une densité comprise entre 0,910 et 0,926 grammes/centimètres cubes.
